# EUROPEAN PATENT SPECIFICATION

(11) **EP 3 392 498 B1**
(45) Date of publication and mention of the grant of the patent: **03.07.2019**
(21) Application number: 18168176.8
(22) Date of filing: 19.04.2018
(51) Int. Cl.: F02M 35/12, B60K 11/04, B60K 13/02, F01N 1/16, G10K 11/22

(54) **PNEUMATICALLY INSULATING AND ACOUSTICALLY PERMEABLE SYMPOSER DEVICE FOR A NOISE TRANSMISSION DUCT OF AN INTERNAL COMBUSTION ENGINE**
PNEUMATISCH ISOLIERENDE UND AKUSTISCH PERMANIERBARE SYMPOSIERVORRICHTUNG FÜR EINEN LÄRMÜBERTRAGUNGSKANAL EINER BRENNKRAFTMASCHINE
DISPOSITIF D'AMÉLIORATION DU BRUIT PNEUMATIQUEMENT ISOLANT ET ACOUSTIQUEMENT PERMÉABLE POUR UN CONDUIT DE TRANSMISSION DE BRUIT D'UN MOTEUR À COMBUSTION INTERNE

(30) Priority: 21.04.2017 IT 201700044358
(43) Date of publication of application: 24.10.2018
(73) Proprietor: FERRARI S.p.A., 41100 Modena (IT)
(72) Inventor: NACLERIO, Francesco, 32100 BELLUNO (IT)
(74) Representative: Maccagnan, Matteo

(56) References cited:
- EP-A1- 1 365 120
- DE-A1- 10 222 507
- US-A1- 2007 292 281

## Description

### PRIORITY CLAIM

This application claims priority from Italian Patent Application No. 102017000044358 filed on April 21, 2017.

### TECHNICAL FIELD

The invention relates to a pneumatically insulating and acoustically permeable symposer device for a noise transmission duct of an internal combustion engine.

The invention finds advantageous application in a high-performance sports car, to which explicit reference will be made in the description below without because of this loosing in generality.

### PRIOR ART

In a high-performance sports car, the noise of the internal combustion engine perceived inside the passenger compartment is highly important.

A significant component in the judgement of a high-perforce sports car is the "*quality*" of the sound emitted by the exhaust system (not only and not primarily in terms of intensity of the sound, but especially in terms of "*likeability*" of the emitted sound), namely the degree of satisfaction in the use of a high-performance sports car is significantly influenced also by the "*quality*" of the sound emitted by the exhaust system. In order to actively control the sound emitted by the exhaust system, different high-performance sports cars are equipped with an exhaust system with a variable geometry, namely an exhaust system provided with one or more electrically or pneumatically controlled valves, which allow the path of the exhaust gases (and, hence, of the sound) along the exhaust system to be changed; as a consequence, in use, the electronic control unit of the engine changes in real time the geometry of the exhaust system so as to try and always offer a sound emitted by the exhaust system that matches the expectations of the users of the car, obviously in compliance with the achievement of type approval targets concerning exhaust noise intensity.

Generally speaking, turbocharged engines are disadvantaged as the presence of the turbine along the exhaust duct and of the compressor along the intake duct add a filter and a lowering of the sound levels both of the exhaust system and of the intake system.

Furthermore, recent EURO6C emission standards establish the use of exhaust gas treatment devices that significantly jeopardize sound performances, as a particulate filter (also called GPF, i.e. "*Gasoline Particulate Filter*") must necessarily be present in series to the catalytic converter, even in petrol engines.

In order to improve how the noise of the internal combustion engine is perceived inside the passenger compartment, intake noise amplifying devices were suggested, for example like the ones described in patent US7975802B2 or in patent US8127888B2. A known intake noise transmission device comprises an amplification pipe, which originates from the intake duct between the air filter and the throttle valve and has an outlet opening, which is free and faces the passenger compartment; along the amplification pipe there is arranged a symposer device, which is pneumatically insulating and acoustically permeable and fulfils the function of forbidding pressure losses in the intake duct without jeopardizing the transmission of sound waves.

In order to improve how the noise of the internal combustion engine is perceived inside the passenger compartment, exhaust noise amplifying devices were also suggested, for example like the ones described in patent application IT102016000057222A, in patent application DE102012109668A1, or in patent application DE10042012A1. A known exhaust noise transmission device comprises a transmission duct, which originates close to the outlet pipe of the silencer and ends in the area of a wall of the passenger compartment; along the transmission duct there is arranged a symposer device, which is pneumatically insulating and acoustically permeable and fulfils the function of forbidding exhaust gas losses through the transmission duct without jeopardizing the transmission of sound waves.

Some known symposer devices comprise a flexible membrane, which seals in a fluid-tight manner and, at the same time, is free to deform in order to permit the transmission of sound waves. Other known symposer devices (e.g. the one described in patent application EP1365120A1) comprise a rigid plate and an elastic element with an annular shape (which can be flat, cup-shaped or bellows-shaped), which is arranged around the rigid plate and is fixed to an inner wall of the corresponding duct in order to hang the rigid plate, which, therefore, is free to oscillate due to the thrust of pressure pulsations. Therefore, a known symposer device is a "*mass-spring*" system (namely, a system consisting of a spring hanging from a constraint coupled to a mass), which, from the acoustic point of view, behaves like a band-pass filter centred on the resonance frequency of the system; the acoustic passband of the symposer device must be positioned in the area of the most significant frequencies of the noise generated by the internal combustion engine (approximately between 350 and 600 Hz) and must be sufficiently wide (it must approximately have a total width of at least 250-300 Hz).

In order for the acoustic passband of the symposer device to be sufficiently wide, the body featuring elasticity (i.e. the flexible membrane or the elastic element) needs to have a high damping, which can be obtained only if the body featuring elasticity is made of a polymer plastic material (for example silicone). As a consequence, in known symposer devices, at least the body featuring elasticity (i.e. the flexible membrane or the elastic element) is made of a plastic material; this is not a problem when the symposer device is used for the transmission of the intake noise, as the temperature of the air taken in always is much lower than 100°C; on the other hand, this becomes a problem when the symposer device is used for the transmission of the exhaust noise, as the temperature of the exhaust gases can be higher than 700°C when they flow out of the exhaust manifold. In other words, known symposer devices can be used for the transmission of the exhaust noise only if they are installed at the end of the exhaust duct (where the temperature of the exhaust gases is much lower) and if solutions are adopted to reduce the transmission of heat to the symposer devices themselves.

### DESCRIPTION OF THE INVENTION

The object of the invention is to provide a pneumatically insulating and acoustically permeable symposer device for a noise transmission duct of an internal combustion engine, said symposer device being capable of being entirely made of a metal material (hence, resistant to high temperatures), having a wide passband and, at the same time, being simple and economic to be manufactured.

According to the invention, there is provided a pneumatically insulating and acoustically permeable symposer device for a noise transmission duct of an internal combustion engine according to the appended claims.

The appended claims describe preferred embodiments of the invention and form an integral part of the description.

### BRIEF DESCRIPTION OF THE DRAWINGS

The invention will now be described with reference to the accompanying drawings, showing a non-limiting embodiment thereof, wherein:
- figure 1 is a schematic view of a car provided with an exhaust noise transmission device using a symposer device according to the invention;
- figure 2 is a side view of the symposer device of figure 1;
- figure 3 is a perspective and exploded view of the symposer device of figure 1;
- figure 4 is a longitudinal section view along section line IV-IV of the symposer device of figure 1;
- figure 5 is a front view of an actuator plate of the symposer device of figure 1;
- figure 6 is a longitudinal section view along section line VI-VI of the actuator plate of figure 5;
- figure 7 is a front view of an emitter plate of the symposer device of figure 1;
- figure 8 is a longitudinal section view along section line VIII-VIII of the emitter plate of figure 7; and
- figure 9 is a longitudinal section view along section line IV-IV of a variant of the symposer device of figure 1.

### PREFERRED EMBODIMENTS OF THE INVENTION

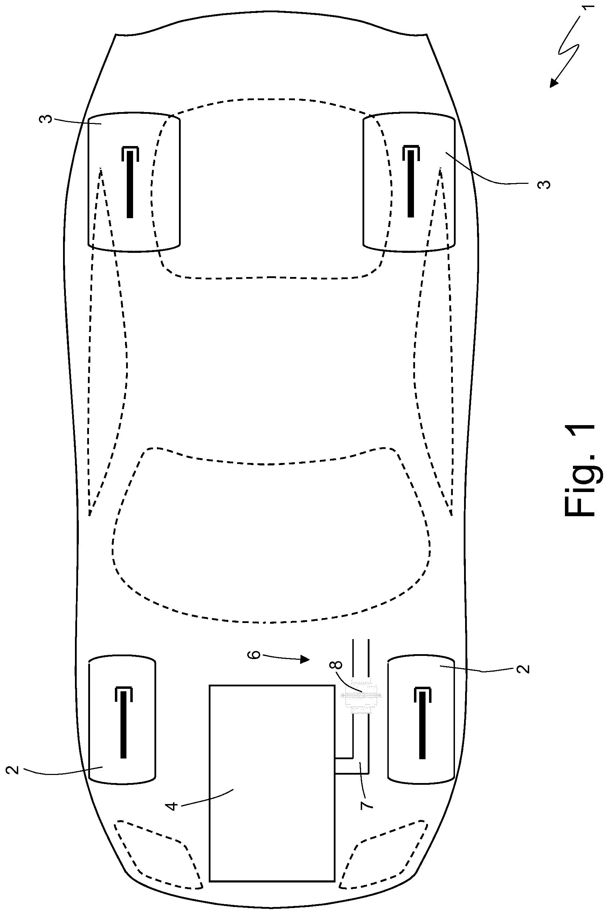

In figure 1, number 1 indicates, as a whole, a car provided with two front wheels 2 and two rear drive wheels 3, which receive the torque from a supercharged internal combustion engine 4 arranged in a front position. The car 1 is provided with a passenger compartment 5 which is designed to house the driver and possible passengers.

The internal combustion engine 4 is provided with (at least) an exhaust noise transmission device 6, which is coupled to an exhaust duct and fulfils the function of directing part of the noise present in the exhaust duct towards the passenger compartment 5. The transmission device 6 comprises a transmission duct 7, which originates from the exhaust duct and is oriented towards the passenger compartment 5; for example, the transmission duct 7 ends in the area of a wall of the passenger compartment 5 (such as, for example, the spark arrestor panel). The transmission duct 7 is provided with a symposer device 8, which is arranged along the transmission duct 7 so as to seal the transmission duct 7 itself in a fluid-tight manner, permitting at the same time the transmission of sound (different redundant symposer devices 8 can be arranged in series so as to have a greater guarantee of seal). In other words, the symposer device 8 is pneumatically insulating (i.e. forbids the passage of gas, sealing in a fluid-tight manner) and is acoustically permeable (i.e. permits the passage of sound).

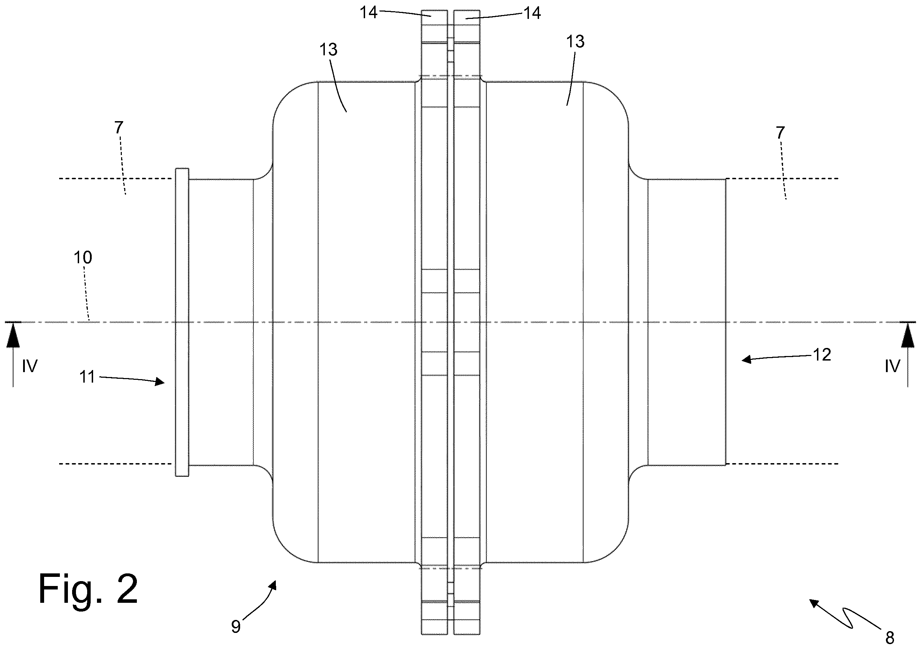

According to figures 2, 3 and 4, the symposer device 8 comprises an outer casing 9 with a tubular shape, which has a central symmetry axis 10 and is provided with an inlet opening 11, which is connected in a sealed manner to an initial part of the transmission duct 7, and with an outlet opening 12, which is opposite the inlet opening 11 and is connected in a sealed manner to a final part of the transmission duct 7 (i.e. the symposer device 8 is arranged along the transmission duct 7 and interrupts the transmission duct 7). The outer casing 9 consists of two twin shells 13, which have respective flanges 14, which are connected to one another by means of screws or through welding.

The outer casing 9 houses, on the inside, an actuator plate 15, which is mounted so as to slide longitudinally (namely, parallel to the central axis 10) and is arranged towards the inlet opening 11 (namely, closer to the inlet opening 11), and an emitter plate 16, which is mounted so as to slide longitudinally (namely, parallel to the central axis 10) and is arranged towards the outlet opening 12 (namely, closer to the outlet opening 12). According to a preferred, though non-binding embodiment shown in the accompanying figures, each plate 15 or 16 is cup-shaped, namely comprises a circular element, which is perpendicular to the central axis 10 and is surrounded by an annular edge, which is parallel to the central axis 10 and projects from the central element.

The actuator plate 15 is provided with a central pin 17, which is mounted so as to slide inside a support 18, which is obtained in a corresponding shell 13 and is internally covered by a bushing 19 (i.e. a plain bearing); in other words, the shell 13 where the inlet opening 11 is made features the support 18 provided with a through hole, which is internally covered by the bushing 19 and houses the central pin 17 of the actuator plate 15, thus allowing the central pin 17 itself to slide longitudinally (i.e. parallel to the central axis 10). The emitter plate 16 is provided with a central pin 20, which is mounted so as to slide inside a support 21, which is obtained in a corresponding shell 13 and is internally covered by a bushing 22 (i.e. a plain bearing); in other words, the shell 13 where the outlet opening 12 is made features the support 21 provided with a through hole, which is internally covered by the bushing 22 and houses the central pin 20 of the emitter plate 16, thus allowing the central pin 20 itself to slide longitudinally (i.e. parallel to the central axis 10).

The central pin 17 of the actuator plate 15 is mechanically constrained to the central pin 20 of the emitter plate 16, so that the two central pins 17 and 20 (hence, the two plates 15 and 16) are rigidly integral to one another and always slide longitudinally (i.e. parallel to the central axis 10) together; in this way, the longitudinal sliding movement of the actuator plate 15 is always transmitted as it is to the emitter plate 17 and, therefore, the emitter plate 17 always slides longitudinally in a synchronized manner with the actuator plate 15.

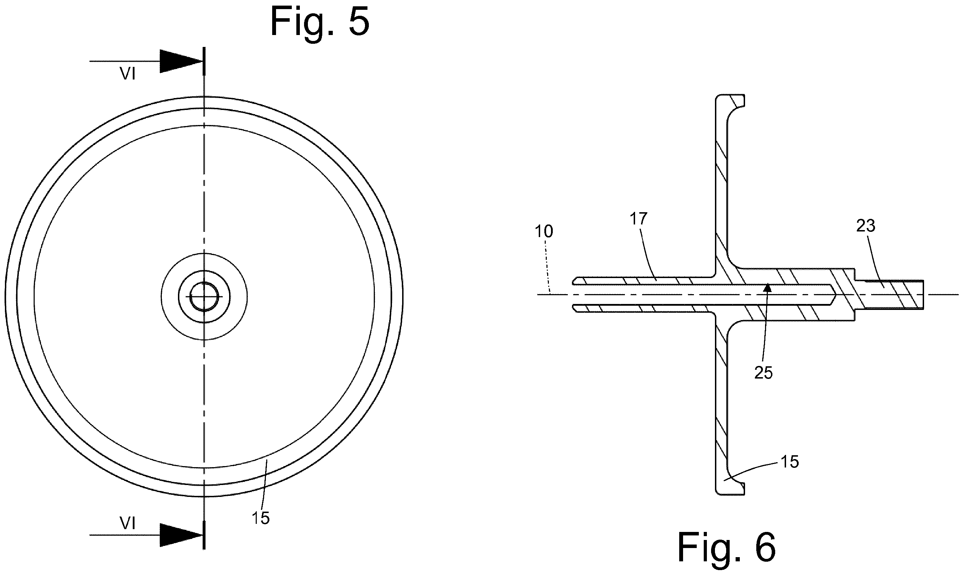

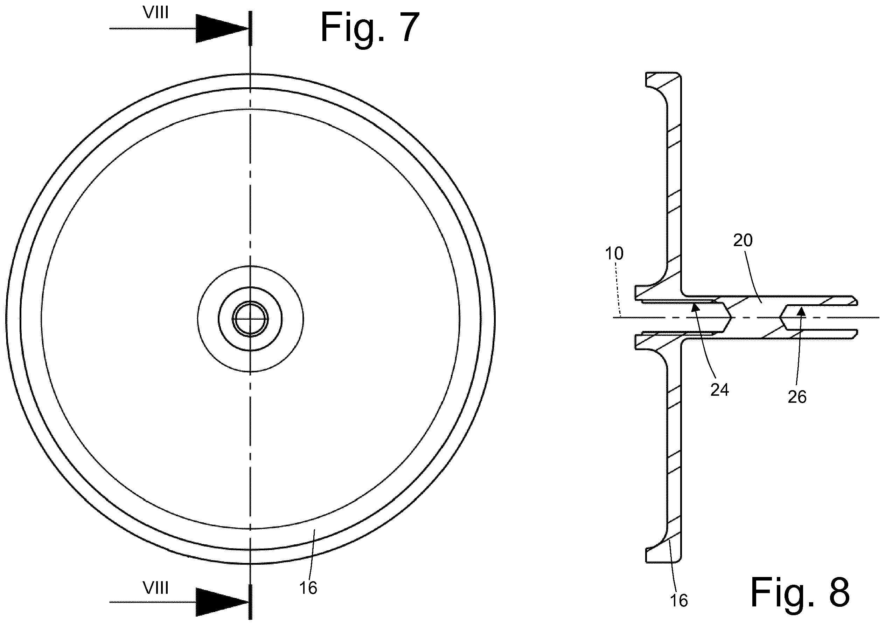

According to a preferred, though not binding embodiment, which is better shown in figures 6 and 8, the central pin 17 of the actuator plate 15 has a threaded point 23, which is screwed into a corresponding threaded hole 24 made in the central pin 20 of the emitter plate 16 so as to establish a rigid and steady connected between the two plates 15 and 16. According to a preferred, though not binding embodiment, which is better shown in figures 6 and 8, the central pin 17 of the actuator plate 15 has a lightening hole 25 oriented longitudinally and having the function of reducing the total mass of the actuator plate 15, and the central pin 20 of the emitter plate 16 has a lightening hole 26 oriented longitudinally (and arranged on the opposite side of the threaded hole 24) and having the function of reducing the total mass of the emitter plate 16.

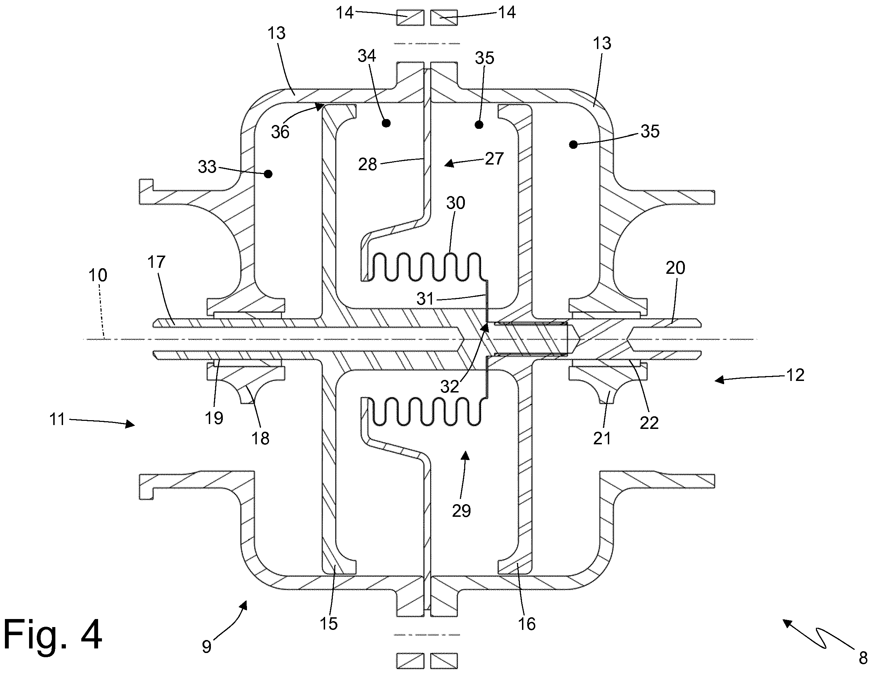

According to figure 4, the casing 9 houses, on the inside, an insulating element 27, which insulates pneumatically (namely, in a fluid-tight manner) so as to prevent fluid from flowing thorough the insulating element 27 itself. According to a preferred, though not binding embodiment, the insulating element 27 is supported by the casing 9, as it is clamped between the two shells 13 (in particular between the two flanges 14) of the casing 9 itself. The insulating element 27 comprises a disc-shaped rigid part 28, which is arranged in the periphery and, hence, is clamped between the two shells 13 (in particular between the two flanges 14) of the casing 9, and an elastic part 29, which is shaped like a bellows (i.e. can be expanded by means of folds), is arranged at the centre and is rigidly constrained to the central pins 17 and 20 of the two plates 15 and 16. In particular, the elastic part 29 of the insulating element 27 is clamped between the central pins 17 and 20 of the two plates 15 and 16, so as to be rigidly constrained to the central pins 17 and 20.

In the preferred embodiment shown in the accompanying figures, the elastic part 29 of the insulating element 27 consists of a side wall 30 with a cylindrical shape and shaped like a bellows (hence, provided with a longitudinal elasticity) and of a base 31 with a circular shape, which is clamped between the central pins 17 and 20 of the two plates 15 and 16; in particular, the base 31 of the elastic part 29 of the insulating element 27 has, at the centre, a through hole 32, trough which the threaded point 23 of the central pin 17 of the actuator plate 15 passes.

Three chambers 33, 34 and 35 are defined inside the casing 9: an inlet chamber 33, which is delimited, on one side, by the inlet opening 11 and, on the other side, by the actuator plate 15 (i.e. the inlet chamber 33 extends from the inlet opening 11 to the actuator plate 15), an intermediate chamber 34, which is delimited, on one side, by the actuator plate 15 and, on the other side, by the insulating plate 27 (i.e. the intermediate chamber 34 extends from the actuator plate 15 to the insulating element 27), and an outlet chamber 35, which is delimited, on one side, by the insulating element 27 and, on the other side, by the outlet opening 12 (i.e. the outlet chamber 35 extends from the insulating element 27 to the outlet opening 12).

The inlet chamber 33 and the intermediate chamber 34 pneumatically communicate with one another in a limited manner, so that the inlet chamber 33 and the intermediate chamber 34 have the same static pressure (i.e. the same mean pressure value), but do not have the same dynamic pressure (i.e. do not have the same instantaneous pressure value). This result is obtained by establishing a pneumatic communication between the inlet chamber 33 and the intermediate chamber 34 only through a communication duct 36 with an adjusted cross section, so that a pressure balance between the inlet chamber 33 and the intermediate chamber 34 requires a relatively long balancing time (e.g. different tenths of a second, namely substantially longer than the period of the sound waves to be transmitted through the symposer device 8); any pressure variation that does not take place in an amount of time that is (substantially) smaller than the balancing time cannot be transmitted between the two chambers 33 and 34 through the communication duct 36. In other words, the adjusted cross section of the communication duct 36 operates like a "*pneumatic low-pass filter*" and does not permit the transmission of too fast pressure variations between the two chambers 33 and 34. In order to operate like a "*pneumatic low-pass filter*" having a cutoff frequency of approximately 20-30 Hz, the communication duct 36 must have a passage cross section that is adjusted and relatively small.

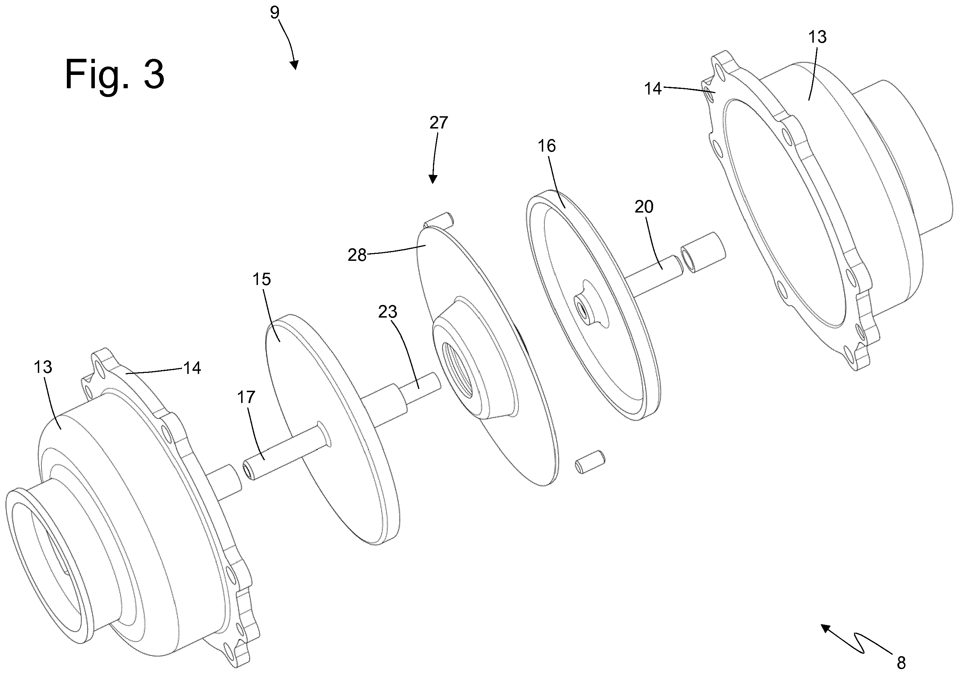

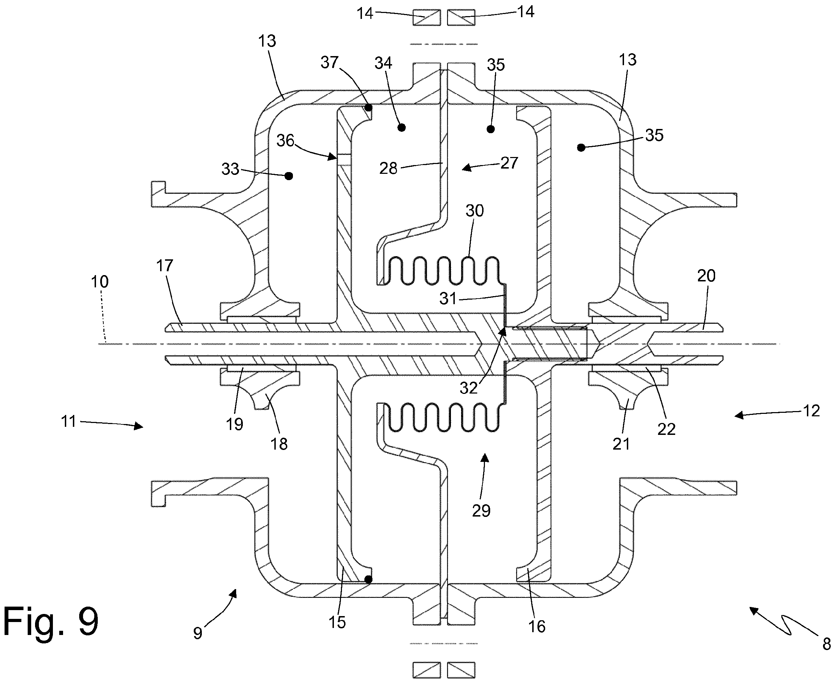

In the embodiment shown in figures 3-8, the communication duct 36 has an annular shape and is obtained between the outer edge of the actuator plate 15 and the inner surface of the casing 9; this embodiment is easier to be manufactured but, on the other hand, the control of the passage cross section of the communication duct 36 is less precise. According to the alternative embodiment shown in figure 9, the communication duct 36 has a circular shape and is obtained through the actuator plate 15 and, at the same time, the outer edge of the actuator plate 15 is provided with a sliding gasket 37 with an annular shape, which ensures a pneumatic seal without significantly hindering the sliding movement of the actuator plate 15 relative to the casing 9 along the central axis 10; this embodiment is more complicated to be manufactured (as it requires the presence of the sliding gasket 37), but the control of the passage cross section of the communication duct 36 is much more precise.

The outlet chamber 35 is comprised between the insulating element 27 and the outlet opening 12 and, therefore, houses the emitter plate 16 on the inside; according to a possible (though not binding) embodiment, the emitter plate 16 is properly smaller than the casing 9, so that the emitter plate 16 (unlike the actuator plate 15) does not pose a significant obstacle to the transmission of pressure and, hence, so that the static pressure and the dynamic pressure upstream of the emitter plate 16 substantially are always equal to the static pressure and the dynamic pressure downstream of the emitter plate 16 (at least in the range of audible frequencies, namely up to approximately 16-20 kHz).

The outlet chamber 35 is pneumatically insulated from the intermediate chamber 34 due to the insulating element 27, which does not permit any fluid communication. As consequence, in the intermediate chamber 34 there is the static pressure of the exhaust duct (from which the transmission duct 7 originates), whereas in the outlet chamber 35 there is the atmospheric pressure (i.e. the pressure of the external environment) as the transmission duct 7 is open towards the passenger compartment (i.e. towards the external environment). As a consequence, the insulating element 27 must bear the pneumatic thrust deriving from the pressure difference existing between the intermediate chamber 34 (where there is the static pressure of the exhaust duct) and the outlet chamber 35 (where there is the atmospheric pressure); this pressure difference can be variable from 0.6-0.8 Bar (60,000-80,000 Pa) up to 2-3 Bar (200,000-300,000 Pa) depending on the point in which the transmission duct 7 is fitted into the exhaust duct (in particular, whether it is upstream or downstream of the turbine of the turbocharger).

As it is known, the pneumatic thrust is equal to the pressure difference existing between the intermediate chamber 34 and the outlet chamber 35 multiplied by the area affected by the pressure difference itself; as a consequence, the greatest part of the pneumatic thrust acts upon (i.e. is borne by) the rigid part 28 of the insulating element 27 and the remaining (minimum) part of the pneumatic thrust acts upon (i.e. is borne by) the base 31 of the elastic part 29 of the insulating element 27 (indeed, the rigid part 28 of the insulating element 27 has a much larger area than the base 31 of the elastic part 29 of the insulating element 27; the ratio between the area of the rigid part 28 of the insulating element 27 and the area of the base 31 of the elastic part 29 of the insulating element 27 can approximately range between 20 and 30).

The longitudinal movement of the plates 15 and 16 (which, for they are rigidly constrained to one another, always move together) is permitted by the elasticity of the elastic part 29 of the insulating element 27, namely it takes place by elastically deforming the elastic part 29 of the insulating element 27.

Hereinafter there is a description of the operation of the symposer device 8 with reference to figure 4.

In use, the sound (acoustic) waves present in the exhaust system propagate along the transmission duct 7 until they reach the symposer device 8 and, hence, enter the inlet chamber 33 of the symposer device 8 through the inlet opening 11. The sound (acoustic) waves in the inlet chamber 33 of the symposer device 8 cause, inside the inlet chamber 33, pressure oscillations with an audible frequency, which are not transmitted to the intermediate chamber 34 of the symposer device 8 because the communication duct 36 between the two chambers 33 and 34 is not capable of transmitting pressure oscillations at an audible frequency (i.e. exceeding 20-30 Hz). Therefore, there is a difference between the dynamic pressure present in the inlet chamber 33 and the dynamic pressure present in the intermediate chamber 34 due to the presence of pressure pulsations at the audible frequency only in the inlet chamber 33; this pressure difference, which is due to the presence of pressure pulsations at the audible frequency only in the inlet chamber 33, generates a pneumatic force which acts upon the actuator plate 15 (indeed, the actuator plate 15 "*sees*" a pressure difference between its two faces), which causes the actuator plate 15 to oscillate longitudinally (i.e. parallel to the central axis 10). The longitudinal oscillation of the actuator plate 15 is transmitted as it is to the emitter plate 16, as the two plates 15 and 16 are rigidly connected to one another through the respective central pins 17 and 20; the longitudinal oscillation of the emitter plate 16 generates in the outlet chamber 35 pressure pulsations which are completely similar to the pressure pulsations present in the inlet chamber 33 and determine the generation of sound (acoustic) waves, which flow out of the outlet chamber 35 of the symposer device 8 through the outlet opening 12, proceeding along the transmission duct 7 downstream of the symposer device 8.

According to a preferred embodiment, the symposer device 8 is entirely made of a metal material; at least the elastic part 29 of the insulating element 27 or the entire insulating element 27 are usually (though not necessarily) made of spring steel so as to ensure a greater resistance to fatigue, the plates 15 and 16 are usually made of aluminium so as to be lighter (since they are parts in continuous and quick movement), whereas the casing 9 can be made of steel (in order to be more economic) or aluminium (in order to be lighter).

In the symposer device 8, the pneumatic seal is assigned to the insulating element 27, whereas the transmission of sound (acoustic) waves is assigned to the two plates 15 and 16, which oscillate together longitudinally (i.e. parallel to the central axis 10). In this way, in the symposer device 8, the pneumatic insulation function (carried out by the insulating element 27) is separated from the acoustic transmission function (carried out by the two plates 15 and 16, which oscillate together longitudinally). As a consequence, the elastic part 29 of the insulating element 27 can be very small (namely, much smaller than the plates 15 and 16) and, hence, can be subjected to moderate pneumatic-origin forces, whereas the plates 15 and 16 can be very large (namely, much larger than the elastic part 29 of the insulating element 27) so as to have a large receiving/irradiating surface, which maximizes acoustic transmission.

The embodiments described herein can be combined with one another, without for this reason going beyond the scope of protection of the invention.

The symposer device 8 described above has numerous advantages.

First of all, the symposer device 8 described above can be entirely made of a metal material, even though it can have an acoustic passband which is positioned in the area of the most significant frequencies of the noise generated by the internal combustion engine (approximately between 350 and 600 Hz) and is sufficiently wide (approximately with a total width of at least 250-300 Hz). This result is obtained by separating the pneumatic insulation function (carried out by the insulating element 27) from the acoustic transmission function (carried out by the plates 15 and 16).

Furthermore, the symposer device 8 described above is especially sturdy, compact and light-weighted, even though it is entirely made of a metal material.

Finally, the symposer device 8 described above is simple and economic to be manufactured because it consists of a limited number of easily assemblable pieces.

### LIST OF THE REFERENCE NUMBERS OF THE FIGURES

- 1: car
- 2: front wheels
- 3: rear wheels
- 4: internal combustion engine
- 5: passenger compartment
- 6: transmission device
- 7: transmission duct
- 8: symposer device
- 9: casing
- 10: central axis
- 11: inlet opening
- 12: outlet opening
- 13: shells
- 14: flanges
- 15: actuator plate
- 16: emitter plate
- 17: central pin
- 18: support
- 19: bushing
- 20: central pin
- 21: support
- 22: bushing
- 23: threaded point
- 24: threaded hole
- 25: lightening hole
- 26: lightening hole
- 27: insulating element
- 28: rigid part
- 29: elastic part
- 30: side wall
- 31: base
- 32: through hole
- 33: inlet chamber
- 34: intermediate chamber
- 35: outlet chamber
- 36: communication duct
- 37: sliding gasket

## Claims

1. A pneumatically insulating and acoustically permeable symposer device (8) for a noise transmission duct (7) of an internal combustion engine; the symposer device (8) comprises:
an outer casing (9) with a tubular shape, which has an inlet opening (11) designed to be connected to an initial part of the transmission duct (7), and an outlet opening (12), which is opposite the inlet opening (11) and is designed to be connected to a final part of the transmission duct (7); and
an actuator plate (15), which is housed in the outer casing (9), is arranged towards the inlet opening (11), and is mounted so as to slide longitudinally;
the symposer device (8) is **characterized in that** it comprises:
an emitter plate (16), which is housed in the outer casing (9), is arranged towards the outlet opening (12), is mounted so as to slide longitudinally, and is rigidly constrained to the actuator plate (15);
an insulating element (27), which is housed in the outer casing (9) and supported by it, insulates pneumatically without allowing any fluid passage through itself, and is arranged between the actuator plate (15) and the emitter plate (16); and
a communication duct (36) with an adjusted cross section, which establishes a limited pneumatic communication between an inlet chamber (33) arranged upstream of the actuator plate (15) between the inlet opening (11) and the actuator plate (15) and an intermediate chamber (34) arranged downstream of the actuator plate (15) between the actuator plate (15) and the insulating element (27), so that the inlet chamber (33) and the intermediate chamber (34) have the same static pressure but do not have the same dynamic pressure.

2. A symposer device (8) according to claim 1, wherein the inlet chamber (33) and the intermediate chamber (34) pneumatically communicate with one another only through the communication duct (36) with an adjusted cross section, so that a pressure balance between the inlet chamber (33) and the intermediate chamber (34) requires a balancing time that is longer than the period of the sound waves to be transmitted through the symposer device (8).

3. A symposer device (8) according to claim 1 or 2, wherein the adjusted cross section of the communication duct (36) operates like a "*pneumatic low-pass filter*" and does not allow the transmission of too fast pressure variations between the inlet chamber (33) and the intermediate chamber (34) .

4. A symposer device (8) according to claim 1, 2, or 3, wherein the communication duct (36) has an annular shape and is obtained between an outer edge of the actuator plate (15) and an inner surface of the casing (9).

5. A symposer device (8) according to claim 1, 2 or 3, wherein:
the communication duct (36) is obtained through the actuator plate (15); and
an outer edge of the actuator plate (15) is provided with a sliding gasket (37) with an annular shape.

6. A symposer device (8) according to any of the claims from 1 to 5, wherein:
the outer casing (9) consists of two twin shells (13), which have respective flanges (14), which are connected to one another by means of screws or through welding; and
the insulating element (27) is supported by the casing (9) by being clamped between the two shells (13).

7. A symposer device (8) according to any of the claims from 1 to 6, wherein the insulating element (27) comprises an elastic part (29), which is rigidly constrained to the plates (15, 16).

8. A symposer device (8) according to claim 7, wherein the insulating element (27) comprises a disc-shaped rigid part (28), which is arranged in the periphery, and an elastic part (29), which is arranged at the centre and is rigidly constrained to the two plates (15, 16).

9. A symposer device (8) according to claim 7 or 8, wherein the elastic part (29) of the insulating element (27) is shaped like a bellows.

10. A symposer device (8) according to claim 9, wherein:
the actuator plate (15) is provided with a first central pin (17), which is mounted so as to slide;
the emitter plate (16) is provided with a second central pin (20), which is mounted so as to slide;
the two central pins (17, 20) are rigidly constrained to one another; and
the elastic part (29) of the insulating element (27) is clamped between the central pins (17, 20) of the two plates (15, 16), so as to be rigidly constrained to the central pins (17, 20).

11. A symposer device (8) according to any of the claims from 1 to 10, wherein:
the actuator plate (15) is provided with a first central pin (17), which is mounted so as to slide inside a first support (18), which is obtained in a first shell (13) and is internally covered by a first bushing (19); and
the emitter plate (16) is provided with a second central pin (20), which is mounted so as to slide inside a second support (21), which is obtained in a second shell (13) and is internally covered by a second bushing (22).

12. A symposer device (8) according to claim 11, wherein the first central pin (17) of the actuator plate (15) is mechanically constrained to the second central pin (20) of the emitter plate (16), so that the two pins (17, 20) are rigidly constrained to one another and always slide together longitudinally.

13. A symposer device (8) according to claim 12, wherein the first central pin (17) of the actuator plate (15) has a threaded point (23), which is screwed into a corresponding threaded hole (24) made in the second central pin (20) of the emitter plate (16).

14. A symposer device (8) according to claim 11, 12 or 13, wherein the first central pin (17) of the actuator plate (15) has a first lightening hole (25) oriented longitudinally and the second central pin (20) of the emitter plate (16) has a second lightening hole (26) oriented longitudinally.

15. A symposer device (8) according to any of the claims from 1 to 14, wherein each plate (15, 16) is cup-shaped, namely comprises a circular element, which is perpendicular to the central axis (10) and is surrounded by an annular edge, which is parallel to the central axis (10) and projects from the central element.

## Patentansprüche

1. Pneumatisch isolierende und schalldurchlässige Symposervorrichtung (8) für einen Geräuschübertragungskanal (7) eines Verbrennungsmotors, wobei die Symposervorrichtung aufweist:
ein röhrenförmiges Außengehäuse (9) mit einer Einlassöffnung (11), die zur Verbindung mit einem Anfangsteil des Übertragungskanals (7) ausgebildet ist, und einer Auslassöffnung (12), die der Einlassöffnung (11) gegenüberliegt und zur Verbindung mit einem Endteil des Übertragungskanals (7) ausgebildet ist; und
eine Stellplatte (15), die in dem Außengehäuse (9) untergebracht, zur Einlassöffnung (11) hin angeordnet und in Längsrichtung gleitbeweglich angebracht ist;
die Symposervorrichtung (8) ist **dadurch gekennzeichnet, dass** sie aufweist:
eine Auslassplatte (16), die in dem Außengehäuse (9) untergebracht, zur Auslassöffnung (12) hin angeordnet, in Längsrichtung gleitbeweglich angebracht und starr mit der Stellplatte (15) gekoppelt ist;
ein Isolierelement (27), das in dem Außengehäuse (9) untergebracht ist und von diesem getragen wird, das pneumatisch isoliert und keinen Fluiddurchtritt durch sich hindurch zulässt und zwischen der Betätigungsplatte (15) und der Auslassplatte (16) angeordnet ist; und einen Verbindungskanal (36) mit einem angepassten Querschnitt, der eine begrenzte pneumatische Verbindung zwischen einer Einlasskammer (33), die stromaufwärts der Stellplatte (15) zwischen der Einlassöffnung (11) und der Stellplatte (15) angeordnet ist, und einer Zwischenkammer (34), die stromabwärts der Stellplatte (15) zwischen der Stellplatte (15) und dem Isolierelement (27) angeordnet ist, so herstellt, dass die Einlasskammer (33) und die Zwischenkammer (34) den gleichen statischen Druck, aber nicht den gleichen dynamischen Druck aufweisen.

2. Symposervorrichtung (8) nach Anspruch 1, wobei die Einlasskammer (33) und die Zwischenkammer (34) nur über den Verbindungskanal (36) mit einem angepassten Querschnitt pneumatisch miteinander verbunden sind, sodass ein Druckausgleich zwischen der Einlasskammer (33) und der Zwischenkammer (34) eine Ausgleichszeit erfordert, die länger ist als die Periode der durch die Symposervorrichtung (8) zu übertragenden Schallwellen.

3. Symposervorrichtung (8) nach Anspruch 1 oder 2, wobei der angepasste Querschnitt des Verbindungskanals (36) wie ein "pneumatisches Tiefpassfilter" arbeitet und keine Übertragung von zu schnellen Druckschwankungen zwischen der Einlasskammer (33) und der Zwischenkammer (34) zulässt.

4. Symposervorrichtung (8) nach Anspruch 1, 2 oder 3, wobei der Verbindungskanal (36) ringförmig ist und zwischen einer Außenkante der Stellplatte (15) und einer Innenfläche des Gehäuses (9) ausgebildet ist.

5. Symposervorrichtung (8) nach Anspruch 1, 2 oder 3, wobei:
der Verbindungskanal (36) durch die Stellplatte (15) erzielt wird; und
auf einer Außenkante der Stellplatte (15) eine ringförmige Gleitdichtung (37) vorgesehen ist.

6. Symposervorrichtung (8) nach einem der Ansprüche 1 bis 5, wobei:
das Außengehäuse (9) aus zwei dünnen Zwillingsschalen (13) besteht, die entsprechende Flansche (14) aufweisen, die mit Schrauben oder durch Schweißen miteinander verbunden sind; und
das Isolierelement (27) von dem Gehäuse (9) getragen wird, indem es zwischen den beiden Schalen (13) eingeklemmt ist.

7. Symposervorrichtung (8) nach einem der Ansprüche 1 bis 6, wobei das Isolierelement (27) einen elastischen Teil (29) aufweist, der starr mit den Platten (15, 16) gekoppelt ist.

8. Symposervorrichtung (8) nach Anspruch 7, wobei das Isolierelement (27) einen scheibenförmigen starren Teil (28), der an dessen Umfang angeordnet ist, und einen elastischen Teil (29) aufweist, der in dessen Mitte angeordnet und starr mit den Platten (15, 16) gekoppelt ist.

9. Symposervorrichtung (8) nach Anspruch 7 oder 8, wobei der elastische Teil (29) des Isolierelements (27) wie ein Faltenbalg geformt ist.

10. Symposervorrichtung (8) nach Anspruch 9, wobei:
an der Stellplatte (15) ein erster zentraler Stift (17) vorgesehen ist, der gleitbeweglich angebracht ist;
an der Auslassplatte (16) ein zweiter zentraler Stift (20) vorgesehen ist, der gleitbeweglich angebracht ist;
die beiden zentralen Stifte (17, 20) starr miteinander gekoppelt sind; und
der elastische Teil (29) des Isolierelements (27) zwischen den beiden zentralen Stiften (17, 20) der Platten (15, 16) eingeklemmt ist, so dass er starr mit den zentralen Stiften (17, 20) gekoppelt ist.

11. Symposervorrichtung (8) nach einem der Ansprüche 1 bis 10, wobei:
an der Stellplatte (15) ein erster zentraler Stift (17) vorgesehen ist, der gleitbeweglich in einem ersten Träger (18) angebracht ist, der in einer ersten Schale (13) ausgebildet und innen von einer ersten Hülse (19) bedeckt ist; und
an der Auslassplatte (16) ein zweiter zentraler Stift (20) vorgesehen ist, der gleitbeweglich in einem zweiten Träger (21) angebracht ist, der in einer zweiten Schale (13) ausgebildet und innen von einer zweiten Hülse (22) bedeckt ist.

12. Symposervorrichtung (8) nach Anspruch 11, wobei der erste zentrale Stift (17) der Stellplatte (15) mechanisch mit dem zweiten zentralen Stift (20) der Auslassplatte (16) gekoppelt ist, sodass die beiden Stifte (17, 20) starr miteinander gekoppelt sind und stets gemeinsam in Längsrichtung gleiten.

13. Symposervorrichtung (8) nach Anspruch 12, wobei der erste zentrale Stift (17) der Stellplatte (15) eine Gewindespitze (23) aufweist, die in eine entsprechende Gewindebohrung (24) im zweiten zentralen Stift (20) der Auslassplatte (16) eingeschraubt ist.

14. Symposervorrichtung (8) nach Anspruch 11, 12 oder 13, wobei der erste zentrale Stift (17) der Stellplatte (15) ein erstes längs ausgerichtetes Erleichterungsloch (25) aufweist und der zweite zentrale Stift (20) der Auslassplatte (16) ein zweites längs ausgerichtetes Erleichterungsloch (26) aufweist.

15. Symposervorrichtung (8) nach einem der Ansprüche 1 bis 14, wobei jede Platte (15, 16) becherförmig ist, insbesondere ein kreisförmiges Element aufweist, das senkrecht zur Mittelachse (10) angeordnet und von einer Ringkante umgeben ist, die parallel zur Mittelachse (10) angeordnet ist und von dem zentralen Element hervorsteht.

## Revendications

1. Dispositif amplificateur (8) pneumatiquement isolant et acoustiquement perméable pour un conduit de transmission de bruit (7) d'un moteur à combustion interne ; le dispositif amplificateur (8) comprend :
un boîtier externe (9) de forme tubulaire, qui a une ouverture d'entrée (11) conçue pour être reliée à une partie initiale du conduit de transmission (7), et une ouverture de sortie (12), qui est opposée à l'ouverture d'entrée (11) et qui est conçue pour être reliée à une partie finale du conduit de transmission (7) ; et
une plaque d'actionnement (15), qui est logée dans le boîtier externe (9), est agencée vers l'ouverture d'entrée (11) et est montée de manière à coulisser longitudinalement ;
le dispositif amplificateur (8) étant **caractérisé en ce qu'**il comprend :
une plaque d'émission (16), qui est logée dans le boîtier externe (9), est agencée vers l'ouverture de sortie (12), est montée de manière à coulisser longitudinalement et est rigidement contrainte à la plaque d'actionnement (15) ;
un élément isolant (27), qui est logé dans le boîtier externe (9) et supporté par celui-ci, assure une isolation pneumatique sans permettre à tout fluide de le traverser et est agencé entre la plaque d'actionnement (15) et la plaque d'émission (16) ; et
un conduit de communication (36) à section transversale réglée, qui établit une communication pneumatique limitée entre une chambre d'entrée (33) agencée en amont de la plaque d'actionnement (15) entre l'ouverture d'entrée (11) et la plaque d'actionnement (15) et une chambre intermédiaire (34) agencée en aval de la plaque d'actionnement (15) entre la plaque d'actionnement (15) et l'élément isolant (27), de sorte que la chambre d'entrée (33) et la chambre intermédiaire (34) aient la même pression statique mais n'aient pas la même pression dynamique.

2. Dispositif amplificateur (8) selon la revendication 1, dans lequel la chambre d'entrée (33) et la chambre intermédiaire (34) communiquent pneumatiquement entre elles seulement par le conduit de communication (36) à section transversale réglée, de sorte qu'un équilibre de pression entre la chambre d'entrée (33) et la chambre intermédiaire (34) nécessite un temps d'équilibrage qui est plus long que la période de transmission des ondes sonores à travers le dispositif amplificateur (8).

3. Dispositif amplificateur (8) selon la revendication 1 ou 2, dans lequel la section transversale réglée du conduit de communication (36) fonctionne comme un "*filtre passe-bas pneumatique*" et ne permet pas la transmission de variations de pression trop rapides entre la chambre d'entrée (33) et la chambre intermédiaire (34).

4. Dispositif amplificateur (8) selon la revendication 1, 2 ou 3, dans lequel le conduit de communication (36) a une forme annulaire et est obtenu entre un bord externe de la plaque d'actionnement (15) et une surface interne du boîtier (9).

5. Dispositif amplificateur (8) selon la revendication 1, 2 ou 3, dans lequel :
le conduit de communication (36) est obtenu à travers la plaque d'actionnement (15) ; et
un bord externe de la plaque d'actionnement (15) est pourvu d'un joint d'étanchéité coulissant (37) de forme annulaire.

6. Dispositif amplificateur (8) selon l'une des revendications 1 à 5, dans lequel :
le boîtier externe (9) est constitué de deux coques jumelles (13), qui ont des brides respectives (14), qui sont reliées entre elles au moyen de vis ou par soudage ; et
l'élément isolant (27) est supporté par le boîtier (9) en étant serré entre les deux coques (13).

7. Dispositif amplificateur (8) selon l'une des revendications 1 à 6, dans lequel l'élément isolant (27) comprend une partie élastique (29), qui est rigidement contrainte aux plaques (15, 16).

8. Dispositif amplificateur (8) selon la revendication 7, dans lequel l'élément isolant (27) comprend une partie rigide en forme de disque (28), qui est agencée à la périphérie, et une partie élastique (29), qui est agencée au centre et qui est rigidement contrainte aux deux plaques (15, 16).

9. Dispositif amplificateur (8) selon la revendication 7 ou 8, dans lequel la partie élastique (29) de l'élément isolant (27) est en forme de soufflet.

10. Dispositif amplificateur (8) selon la revendication 9, dans lequel :
la plaque d'actionnement (15) est pourvue d'une première broche centrale (17), qui est montée de manière à coulisser ;
la plaque d'émission (16) est pourvue d'une deuxième broche centrale (20), qui est montée de manière à coulisser;
les deux broches centrales (17, 20) sont rigidement contraintes l'une à l'autre ; et
la partie élastique (29) de l'élément isolant (27) est serrée entre les broches centrales (17, 20) des deux plaques (15, 16), de manière à être rigidement contrainte aux broches centrales (17, 20).

11. Dispositif amplificateur (8) selon l'une des revendications 1 à 10, dans lequel :
la plaque d'actionnement (15) est pourvue d'une première broche centrale (17), qui est montée de manière à coulisser à l'intérieur d'un premier support (18), qui est obtenu dans une première coque (13) et qui est recouvert intérieurement d'une première douille (19) ; et
la plaque d'émission (16) est pourvue d'une deuxième broche centrale (20), qui est montée de manière à coulisser à l'intérieur d'un deuxième support (21), qui est obtenu dans une deuxième coque (13) et qui est recouvert intérieurement d'une deuxième douille (22).

12. Dispositif amplificateur (8) selon la revendication 11, dans lequel la première broche centrale (17) de la plaque d'actionnement (15) est mécaniquement contrainte à la deuxième broche centrale (20) de la plaque d'émission (16), de sorte que les deux broches (17, 20) soient rigidement contraintes l'une à l'autre et coulissent toujours ensemble longitudinalement.

13. Dispositif amplificateur (8) selon la revendication 12, dans lequel la première broche centrale (17) de la plaque d'actionnement (15) a une pointe filetée (23), qui est vissée dans un trou fileté correspondant (24) réalisé dans la deuxième broche centrale (20) de la plaque d'émission (16).

14. Dispositif amplificateur (8) selon la revendication 11, 12 ou 13, dans lequel la première broche centrale (17) de la plaque d'actionnement (15) a un premier trou d'allégement (25) orienté longitudinalement et la deuxième broche centrale (20) de la plaque d'émission (16) a un deuxième trou d'allégement (26) orienté longitudinalement.

15. Dispositif amplificateur (8) selon l'une des revendications 1 à 14, dans lequel chaque plaque (15, 16) est en forme de coupelle, à savoir comprend un élément circulaire, qui est perpendiculaire à l'axe central (10) et qui est entouré par un bord annulaire, qui est parallèle à l'axe central (10) et qui fait saillie à partir de l'élément central.
